# EUROPEAN PATENT APPLICATION

(11) **EP 4 841 138 A1**
(43) Date of publication of application: **18.11.2026**
(21) Application number: 26177549.8
(22) Date of filing: 08.05.2026
(51) Int. Cl.: F16K 1/06, F16K 1/12, F16K 1/34

(54) **ACCESSORY DISPENSER FOR CONTAINMENT VALVES FOR PHARMACEUTICAL MATERIALS**

(30) Priority: 12.05.2025 IT 202500010686
(71) Applicant: Cosmec Italia S.r.l., 55060 Capannori Lucca (IT)
(72) Inventor: Mazzoni, Massimo, Lucca (IT)
(74) Representative: Firmati, Leonardo

(57) **Abstract**

Described is an accessory (1) material dispenser for containment valves (2) for the transfer of pharmaceutical materials, comprising a hopper (3) for containing a material to be transferred, a tubular cylinder (4) arranged inside the hopper (3) and slidably movable with respect to it, a piston (5) for closing the tubular cylinder (4), arranged inside it and slidably engaged with it, an actuating rod (6)of the piston (5) and tubular cylinder (4).

## Description

The present invention relates to an accessory dispenser for containment valves for the transfer of pharmaceutical materials.

In particular, the present invention relates to an accessory for dispensing material through containment valves for the transfer of pharmaceutical materials. Containment valves are usually used for temporarily connecting two chambers so as to allow the transfer of material from a starting container to a destination container.

In particular, the containment valve for the transfer of pharmaceutical materials is of the type having, in the open mode, a central cylindrical compartment for the passage of material and such as allow a transfer of material avoiding dispersion of the material into the outside environment or, vice versa, contamination of the material from the outside environment. Valves of this type are defined, for example, in Italian patent application no. 202024000004434 in the name of the same Applicant.

The contents of this application are to be considered fully incorporated here for reference.

In general, during the transfer of the products treated in the chemical and pharmaceutical plants, where the concerns about the contamination risks are most felt, the material transferred through the containment valve normally comes into contact, more or less directly, with internal parts of the valve, or in any case, is never effectively isolated from those parts.

For example, the valves of the so-called split butterfly type, also known as butterfly valves, comprise a pair of portions suitable for being coupled to respective containers and to be reciprocally coupled by means of seals, and a shutter (represented by the coupling of the two portions) arranged inside the conduit for transferring material and identified by a disc which rotates about a relative axis normal to the direction of the flow of material.

It is evident that this disc, as it is arranged at the centre of the zone of passage of the material during the transfer, therefore becomes contaminated by contact with the material itself.

The above-mentioned valves of the type having, in the open mode, a central cylindrical compartment for the passage of the material, are likewise exposed to the contamination, since the walls of the central compartment are in any case exposed to the contact with the material flowing inside.

Dispenser devices are known in the prior art, such as, for example, the one described in patent document US 3,978,900 (D1), which illustrates a sliding cylinder mechanism for the bottling of liquids. However, these prior art devices have extremely complex kinematics and are not suitable for managing the transfer of solid materials in a simple, safe and controlled manner in the pharmaceutical field, where the risk of contamination must be minimised.

For this reason, the purpose of the present invention is to propose a material dispenser accessory, which can be combined with containment valves for the transfer of pharmaceutical materials, so as to solve the drawbacks of the prior art, thereby limiting the risks of contamination.

In particular, an aim of the present invention is to provide an accessory for containment valves for transferring pharmaceutical materials such as to considerably limit the risks of dispersion of polluting materials into the outside environment.

Another aim of the present invention is to provide an accessory for containment valves for the transfer of pharmaceutical materials that makes it possible to limit the contamination of the valves by the materials transferred.

Yet another aim of the present invention is to provide a dispenser accessory for containment valves for the transfer of pharmaceutical materials that is simple and economical to manufacture and practical to use.

According to the invention, these aims and others are achieved by a dispenser accessory for containment valves for the transfer of pharmaceutical materials comprising the technical features described in the accompanying claims.

The technical features of the invention, according to the above-mentioned aims, are clearly described in the appended claims and its advantages are apparent from the detailed description which follows, with reference to the accompanying drawings which illustrate a nonlimiting example embodiment of it, and in which:
- Figure 1 illustrates, in a front elevation view with parts in cross section, a dispenser accessory according to the present invention mounted on a portion of a containment valve for the transfer of pharmaceutical materials;
- Figure 2 illustrates, in a front elevation view with parts in cross section, the accessory of Figure 1 with a respective containment valve in an open configuration;
- Figures 3 to 5 illustrate the accessory shown in Figure 2 in three respective different configurations of use.

With reference to the accompanying drawings, the reference numeral 1 indicates in its entirety a dispenser accessory, made in accordance with the present invention, to be associated with containment valves for the transfer of materials, advantageously pharmaceutical materials.

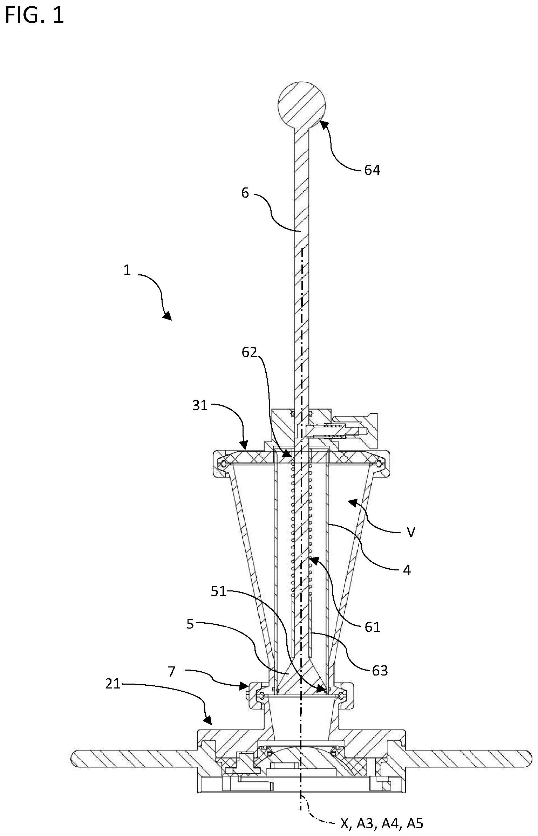

Figure 1 illustrates the dispenser accessory 1, hereinafter also simply referred to as the accessory 1, associated with a portion 21 of a containment valve, that is, the one commonly defined as a passive part of a modular valve.

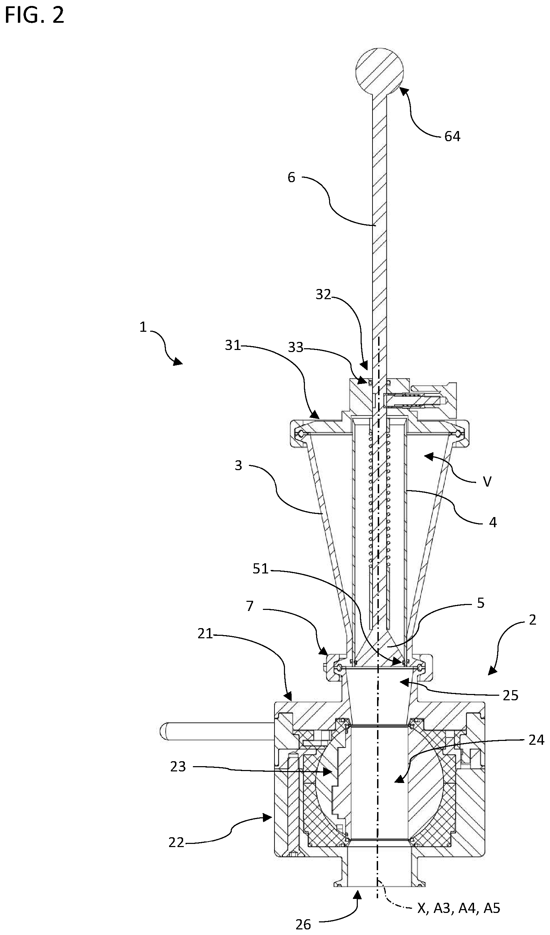

A complete modular valve 2 is, on the other hand, illustrated in the subsequent Figures 2 to 5. This complete modular valve 2 is therefore composed of the above-mentioned portion 21 defining the passive part and of a lower block 22.

The portion 21 and the block 22 can be stably connected to each other in a removable manner.

In the union of the passive portion 21 with the lower block 22, a spherical shutter 23 is defined which can, as a function of the rotation applied to it, assume a closed configuration, not illustrated, in which the passage of material through the valve 2 is prevented, and an open configuration, illustrated in Figures 2 to 5, in which, by contrast, the passage of material through the valve 2 is allowed.

In other words, the shutter 23 has inside it a through cylindrical compartment 24, which, when arranged with its central axis in a vertical position (with reference to the accompanying drawings) creates a connection gap with respective inlet and outlet openings 25, 26 of the valve 2.

As shown in Figure 1, the accessory 1 comprises a hopper 3 for containing a material to be transferred. The hopper 3 has an axially symmetric extension about its central axis A3 and has a substantially conical shape.

The accessory 1 further comprises a tubular cylinder 4 having a central axis A4 and arranged inside the hopper 3 coaxial with it.

The tubular cylinder 4 is slidably movable with respect to it in a first determined direction X, coinciding with the central axis A4 of the tubular cylinder 4.

The accessory 1 further comprises a piston 5 for closing the tubular cylinder 4, arranged inside the tubular cylinder 4 and slidably engaged with it, in ways that will be illustrated in detail below.

The piston 5 has an axially symmetric extension about a respective central axis A5.

The central axis A5 is substantially coinciding with the central axis A4 of the cylinder 4 when the piston 5 is fitted inside the cylinder 4 and also with the central axis A3 of the hopper 3 when both are fitted inside the hopper 3.

The above-mentioned piston 5 is stably connected to the respective actuating rod 6.

With reference to the accompanying drawings, the rod 6 extends longitudinally in a direction coinciding with the central axis A5 of the piston 5 and emerges above both the cylinder 4 and the hopper 5.

At a relative longitudinal end 6a opposite the piston 5, the rod 6 has a gripping handle 64 for manually actuating the rod.

Advantageously, but not necessarily, according to the embodiment illustrated, the handle 64 is formed as a knob.

The above-mentioned rod 6 is suitable for commanding both the movement of the assembly consisting of the cylinder 4 and the piston 5 with respect to the hopper 3, and the relative movement of the piston 5 and the tubular cylinder 4, as described in detail below.

The accessory 1 comprises an upper lid 31 of the hopper 3, the lid 31 being removable and having an opening 32 for the passage of the rod 6. Advantageously, at the opening 32 there is a sealing gasket 33, suitable for preventing the exchange of unwanted particles between the outside and the inside of the accessory 1.

As can be seen in the accompanying drawings, the accessory 1 comprises connecting means 7 for connecting the hopper 3 to the portion 21 of the containment valve 2 .

The connecting means 7 are configured to allow the sliding of the above-mentioned tubular cylinder 4 and piston 5 with respect to the hopper 3.

As clearly illustrated in Figure 1, a helical spring 61 is fitted externally on the rod 6.

The helical spring 61 is arranged, advantageously preloaded in compression, between two cylindrical sleeves 62, 63 (or equivalent abutment elements), upper and lower, respectively, also fitted coaxially on the rod 6.

In particular, the upper sleeve 62 is fixed stably to the rod 6 and moves integrally therewith, while the lower sleeve 63 is integral with the cylinder 4 and slidably movable with respect to the rod 6.

In accordance with variant embodiment not illustrated but falling within the same inventive concept, the elastic means may comprise, alternatively or in combination with the helical spring, cup springs, pneumatic gas springs or deformable elements made of elastomeric material.

Advantageously, the preloaded condition of said helical spring 61 is suitable for normally maintaining the piston 5 in an abutment position against a lower end of said tubular cylinder 4, defining an intrinsically "normally closed" configuration of the accessory 1 under rest conditions. The spring 61 defines, for the accessory 1, respective elastic means interposed between the piston 5 and the tubular cylinder 4 to generate an elastic force antagonistic to the reciprocal sliding, according to the first determined direction X.

This antagonistic elastic force is suitably calibrated to be higher than the sliding friction of the cylinder 4 with respect to the hopper 3, but such as to be overcome when cylinder 4 stops at the end of its stroke against the valve 2.

In this way, the elastic energy of the spring 61 ensures a sequential movement in two phases: a first phase of joint lowering of the cylinder 4 and piston 5 (kept closed by the spring), and a second phase of delayed opening of the piston 5 with respect to the cylinder 4, which occurs only when the cylinder 4 has completed its protective insertion through the valve 2.

As clearly illustrated in the accompanying drawings, at a lower portion 34 of the containment hopper 3, the accessory 1 comprises a scraper ring 35 inserted in a dedicated circular housing formed in an inner wall of hopper 3 itself and interposed between the tubular cylinder 4 and the hopper 3.

The scraper ring 35 is suitable for engaging on an outer surface 41 of the tubular cylinder 4 in order to retain any residual material inside hopper 3.

With reference to the accompanying drawings, the accessory 1 comprises, housed in a respective circular cavity formed in the piston 5, a sealing ring 51 between the piston 5 and the tubular cylinder 4.

The sealing ring 51, as will be described in detail below, is suitable for preventing the leakage of material from inside the tubular cylinder 4 when the piston 5 assumes a closing configuration of the cylinder 4.

In use, as illustrated in Figure 1, the accessory 1 according to the present invention is advantageously arranged connected, by means of the above-mentioned connecting means 7, to a passive portion 21 of a containment valve 2.

In this configuration, the hopper 3 is usefully filled inside with the material, usually in the form of powder, to be transferred through the valve 2, that is, to be transferred inside a container, not illustrated, connected to the outlet opening 26 of the valve 2 itself. With reference to Figure 1, the material to be transferred fills the space V, inside the hopper 3 and not occupied by the tubular cylinder 4.

The passive portion 21 connected to the accessory 1 in the configuration illustrated in Figure 1 is, then, in turn connected to the lower block 22 of the valve 2, so as to compose, in the example embodiment illustrated, the spherical shutter 23 of the valve 2, as illustrated in Figure 2.

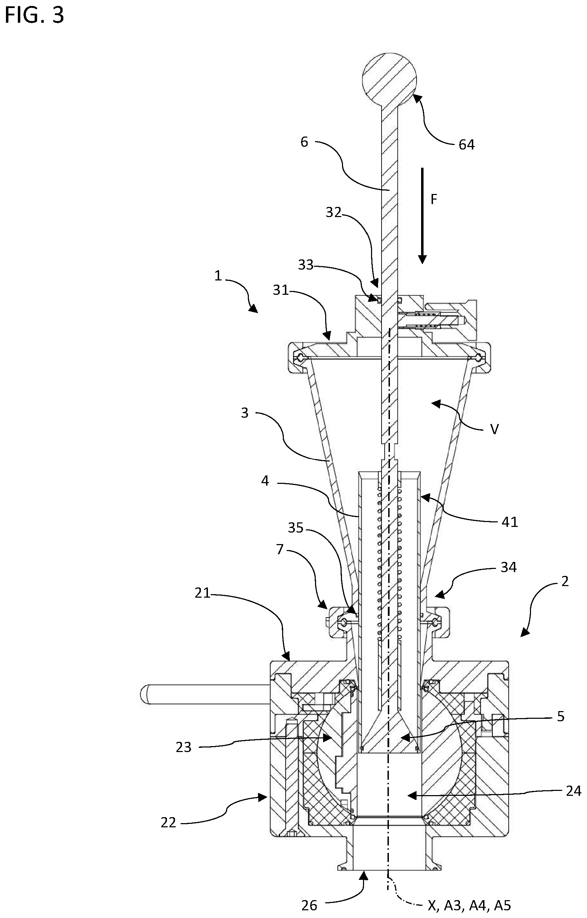

The shutter 23 is then rotated so as to place the valve in an open configuration, as illustrated in Figure 2. Starting from the configuration of Figure 2, acting on the rod 6 by means of the above-mentioned gripping handle 64, an operator who exerts a force F on the rod 6 causes a simultaneous lowering of piston 5 and cylinder 4 so that they penetrate inside the cylindrical chamber 24 of the shutter 23, as illustrated in Figure 3.

The above-mentioned lowering of the tubular cylinder 4 causes a relative open upper end 42 to face the material to be transferred contained in the space V, the material then starting to fall inside the tubular cylinder 4.

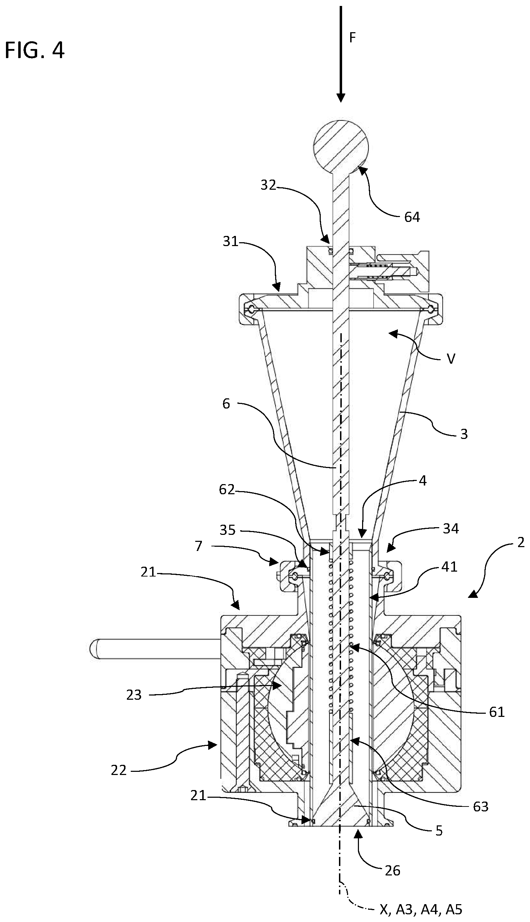

Starting from the configuration illustrated in Figure 3 and continuing to apply the force F, the configuration illustrated in Figure 4 is reached, in which the lower end of the cylinder 4, still attached to the piston 5, reaches the outlet opening 26 of the valve 2.

In this way, advantageously, the tubular cylinder 4 containing the material to be transferred passes completely through the valve 2, so that the material itself does not come into contact with the internal parts of the valve 2.

In other words, thanks to the movement of the tubular cylinder 4, the material being transferred by the containment valve 2 passes through the valve 2 itself without, however, coming into contact with its parts.

An abutment element, not shown, prevents the cylinder 4 from advancing beyond the outlet opening 26 of the valve 2.

During the movement just described, the material present in the space V of the hopper continues to flow into the tubular cylinder 4.

The material which is inside the tubular cylinder 4 is kept inside the cylinder 4 itself thanks to the seal of the piston 5 and its sealing ring 51.

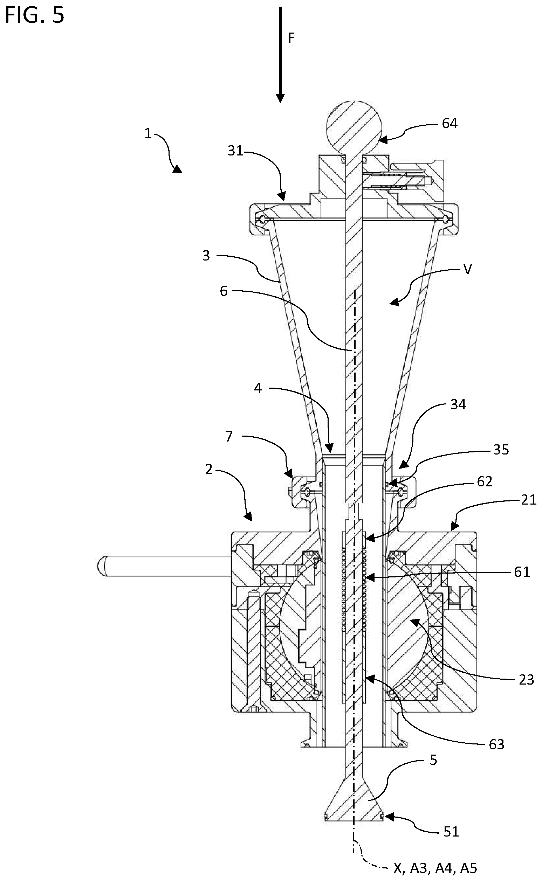

Thanks to the above-mentioned and not illustrated abutment, a further application of the force F on the handle 64 greater than the elastic reaction force exerted by the helical spring 61, determines a further advancement of the piston 5 beyond the outlet opening 26 of the valve 2, as illustrated in Figure 5, thereby interrupting the contact of the seal with the cylinder 4 itself and thus freeing a passageway for the material.

Therefore, as illustrated in Figure 5, the material inside the tubular cylinder 4 is free to fall into the container, not illustrated, connected to the outlet opening 26 of the containment valve 2.

The interruption of the force F and the simultaneous unrestricted application of the elastic reaction force of the helical spring 61 cause the return of the piston 5 to the configuration shown in Figure 4, restoring the contact of the seal 51 with the tubular cylinder 4.

The subsequent application on the rod 6 of a force F' (not illustrated) with a direction opposite to the force F, allows the assembly consisting of piston 5 and tubular cylinder 4 (in the closed condition) to return to the initial configuration shown in Figure 2.

In this manner, any product remaining in the inner wall of the tubular cylinder 4 is prevented from contaminating the internal parts of the valve 2 during the extraction of the cylinder 4 itself from the through cylindrical compartment 24 of the shutter 23.

The above-mentioned handle 64 defines, for the accessory 1 according to the invention, respective means for actuating the actuating rod 6, suitable for causing the relative sliding of the piston 5 with respect to the tubular cylinder 4 and the simultaneous opening or closing of said tubular cylinder 4.

According to the illustrated embodiment of the accessory 1, the above-mentioned actuating means are also suitable for causing the simultaneous sliding of piston 5 and cylinder 4 with respect to the hopper 3.

According to variant embodiments not illustrated but in any case falling within the scope of the invention, the above-mentioned actuating means comprise an actuator of the electric or pneumatic type.

The accessory 1 material dispenser for containment valves 2 according to the present invention overcomes the drawbacks of the prior art and achieves important advantages.

A first important advantage of the accessory according to the invention is due to the fact that during the transfer of materials such as, for example, pharmaceuticals, the risks of dispersion of the material inside the valve are extremely limited.

This limited risk of dispersion constitutes an evident limitation of the contamination of the valve.

The passage of the tubular cylinder through the valve, both on entry and exit from it, in fact physically screens the shutter and the other internal parts of the valve from the flow of material being transferred through the valve.

A further advantage of the dispenser accessory according to the invention is due to the fact that, when connected beneath the passive portion of a modular valve, it becomes a self-contained mobile apparatus containing the material or product to be dispensed. In other words, it is also possible to prepare the material to be dispensed in separate environments and only at the time of the required transfer of the material to mount this assembly on the remaining portion of the valve, thereby further limiting the risks of dispersion of the material itself or contamination of the environment.

## Claims

1. An accessory (1) material dispenser featuring a containment valve for transferring pharmaceutical materials, comprising
- a containment hopper (3) for containing a material to be transferred;
- a tubular cylinder (4) arranged inside said hopper (3) and slidably movable therein in a first determined direction (X) coinciding with a central axis (A4) of the tubular cylinder (4) itself;
- a piston (5) for closing said tubular cylinder (4), arranged inside said tubular cylinder (4) and slidably movable therewith;
- an actuating rod (6) actuating said piston (5) and said tubular cylinder (4), said rod (6) extending longitudinally in said first determined direction (X);
- connecting means (7) for connecting said hopper (3) to a portion (21) of a containment valve (2), said connecting means (7) being configured to allow the sliding of said tubular cylinder (4) and piston (5) with respect to said hopper (3), said accessory (1) being **characterized in that** it comprises elastic means (61) interposed between said piston (5) and said tubular cylinder (4) and configured to generate an elastic force antagonistic to the reciprocal sliding of said rod (6) and said tubular cylinder (4).

2. Accessory (1) according to claim 1, **characterized in that** said elastic means comprise a helical spring (61) fitted on said rod (6), externally thereto.

3. Accessory (1) according to any one of the preceding claims, **characterized in that** it comprises means (64) for actuating said actuating rod (6), for causing relative sliding of said piston (5) with respect to said tubular cylinder (4) and the simultaneous opening or closing of said tubular cylinder (4).

4. Accessory (1) according to claim 3, **characterized in that** said actuating means comprise a gripping handle (64) for manually actuating said rod (6).

5. Accessory (1) according to claim 3, **characterized in that** said actuating means comprise an actuator of the electric or pneumatic type.

6. Accessory (1) according to any one of the preceding claims, **characterized in that** it comprises a scraper ring (35) interposed between said tubular cylinder (4) and containment hopper (3), said scraper ring (35) engaging on an outer surface (41) of said tubular cylinder (4) to retain any residual material inside the hopper (3).

7. Accessory (1) according to any one of the preceding claims, **characterized in that** it comprises a removable upper lid (31) of said containment hopper (3), said upper lid (31) having an opening (32) for the passage of said rod (6).

8. Accessory (1) according to any one of the preceding claims, **characterized in that** it comprises sealing means (51) between said piston (5) and said tubular cylinder (4), configured to prevent material from escaping from inside said tubular cylinder (4) when said piston (5) assumes a cylinder closing configuration (4).

9. Accessory (1) according to any one of the preceding claims, **characterized in that** said elastic means (61) are preloaded in compression so as to normally maintain said piston (5) in a sealing abutment position against a lower end of said tubular cylinder (4), defining a normally closed configuration of the accessory (1) in rest conditions.

10. An assembly of an accessory (1) dispenser according to any of the preceding claims and of a portion (21) of a containment valve for transferring pharmaceutical materials.
